# EUROPÄISCHE PATENTANMELDUNG

(11) **EP 3 480 498 A1**
(43) Veröffentlichungstag der Anmeldung: **08.05.2019**
(21) Anmeldenummer: 18000869.0
(22) Anmeldetag: 06.11.2018
(51) Int. Cl.: F16K 11/044

(54) **KARTUSCHE FÜR EIN SANITÄRELEMENT SOWIE EIN SANITÄRELEMENT**

(30) Priorität: 06.11.2017 DE 102017125865
(71) Anmelder: Grohe AG, 58675 Hemer (DE)
(72) Erfinder: Tüshaus, Jan Philipp, 58675 Hemer (DE); Steinhoff, Stefan, 59846 Sundern (DE); Jung, Andreas, 58730 Fröndenberg (DE); Thiemann, Meik, 59425 Unna (DE)

(57) **Zusammenfassung**

Die Erfindung betrifft eine Kartusche (1) für eine Sanitärarmatur mit einem Gehäuse (2), das einen Mischraum (3), einen in den Mischraum (3) führenden Kaltwasserzulauf (4), einen in den Mischraum (3) führenden Warmwasserzulauf (5) und einen vom Mischraum (3) aus dem Gehäuse (2) führenden Mischwasserablauf (6) aufweist, und einem im Mischraum (3) entlang einer Bewegungsachse (7) axial bewegbar angeordneten ersten Steuerelement (8) zur Einstellung einer Mischwassertemperatur. Erfindungsgemäß weist die Kartusche (1) eine dem ersten Steuerelement (8) in Durchflussrichtung nachgelagerte Mengensteuereinheit (9) zur Einstellung einer Durchflussmenge des Mischwassers auf, die ein um die Bewegungsachse (7) drehbares zweites Steuerelement (10) umfasst.

## Beschreibung

Die vorliegende Erfindung betrifft eine Kartusche für eine Sanitärarmatur mit einem Gehäuse, das einen Mischraum, einen in den Mischraum führenden Kaltwasserzulauf, einen in den Mischraum führenden Warmwasserzulauf und einen vom Mischraum aus dem Gehäuse führenden Mischwasserablauf aufweist, und einem im Mischraum entlang einer Bewegungsachse axial bewegbar angeordneten ersten Steuerelement zur Einstellung einer Mischwassertemperatur.

Bekannt sind Kartuschen für Sanitärarmaturen, die aus einem Kaltwasser und einem Warmwasser ein Mischwasser mischen. Diese umfassen einen Kaltwasser- und einen Warmwassereinlauf, um das entsprechende Wasser in die Kartusche einzuführen. Mit Hilfe eines bewegbaren Steuerelements kann die Temperatur des Mischwassers eingestellt werden. Um das Mischwasser aus der Kartusche auszuführen, weist diese einen Mischwasserablauf auf. Nachteilig bei dieser Art von Kartuschen ist es allerdings, dass die Einstellung der Durchflussmenge mit Hilfe eines zusätzlich zur Kartusche in der Sanitärarmatur angeordneten Durchflusselements erfolgt. In der Sanitärarmatur müssen somit zwei Elemente, die Kartusche zur Einstellung der Mischwassertemperatur und das Durchflusselement, angeordnet werden, so dass einer platzsparenden Ausbildung der Sanitärarmatur Grenzen gesetzt sind.

Aufgabe der vorliegenden Erfindung ist es somit, eine Kartusche zu schaffen, mit deren Hilfe die Mischwassertemperatur und die Durchflussmenge des Mischwassers eingestellt werden können.

Die Aufgabe wird gelöst durch eine Kartusche und eine Sanitärarmatur mit den Merkmalen der unabhängigen Patentansprüche.

Vorgeschlagen wird eine Kartusche für eine Sanitärarmatur, wobei die Sanitärarmatur beispielsweise an einem Waschbecken und/oder an einer Dusche angeordnet sein kann. Die Kartusche umfasst ein Gehäuse, das einen Mischraum, einen in den Mischraum führenden Kaltwasserzulauf, einen in den Mischraum führenden Warmwasserzulauf und einen vom Mischraum aus dem Gehäuse führenden Mischwasserablauf aufweist. Außerdem weist die Kartusche ein im Mischraum entlang einer Bewegungsachse axial bewegbar angeordnetes erstes Steuerelement zur Einstellung einer Mischwassertemperatur auf. Mit Hilfe des ersten Steuerelements wird beispielsweise eine gewisse Menge an Kaltwasser und/oder Warmwasser in den Mischraum eingeführt. Dort mischt sich das Kalt- und das Warmwasser zum Mischwasser zu einer Temperatur, die von den Mengen des Kalt- und des Warmwassers abhängt. Soll das Mischwasser wärmer sein, wird beispielsweise eine größere Menge Warmwasser in den Mischraum eingeleitet und/oder eine Einströmmenge an Kaltwasser in den Mischraum verringert. Soll das Mischwasser dagegen kälter sein, wird beispielsweise eine größere Menge an Kaltwasser in den Mischraum eingeleitet und/oder eine Einströmmenge an Warmwasser in den Mischraum verringert.

Erfindungsgemäß weist die Kartusche eine dem ersten Steuerelement in Durchflussrichtung nachgelagerte Mengensteuereinheit zur Einstellung einer Durchflussmenge des Mischwassers auf. Die Mengensteuereinheit umfasst ein um die Bewegungsachse drehbares zweites Steuerelement. Mit Hilfe der Mengensteuereinheit kann mittels der Kartusche neben der Einstellung der Mischwassertemperatur auch die Durchflussmenge des Mischwassers eingestellt werden. Beispielsweise ist das zweite Steuerelement derart angeordnet, dass es einen Mischwasserfluss aus der Kartusche zumindest teilweise blockieren kann. Beispielsweise kann das zweite Steuerelement die Kartusche auch im Bereich des Mischwasserabflusses zumindest teilweise absperren. Dadurch kann die Durchflussmenge des Mischwassers eingestellt werden. Eine kompakte Ausführung der Sanitärarmatur, in der die erfindungsgemäße Kartusche angeordnet ist, ist somit möglich.

In einer vorteilhaften Weiterbildung der Erfindung weist die Kartusche ein Einstellelement auf, das entlang der Bewegungsachse axial verschiebbar im Gehäuse gelagert ist. Zusätzlich oder alternativ kann das Einstellelement auch um die Bewegungsachse drehbar im Gehäuse gelagert sein. Das Einstellelement kann ferner beispielsweise als eine entlang der Bewegungsachse axial erstreckende Einstellwelle ausgebildet sein. Mit Hilfe des Einstellelements kann das erste Steuerelement zur Einstellung der Mischwassertemperatur entlang der Bewegungsachse axial bewegt und/oder das zweite Steuerelement zur Einstellung der Durchflussmenge um die Bewegungsachse gedreht werden.

Vorteilhaft ist es ferner, wenn das Einstellelement mit den beiden Steuerelementen derart gekoppelt ist, dass mittels des Einstellelements das erste Steuerelement entlang der Bewegungsachse axial verschiebbar und das zweite Steuerelement um die Bewegungsachse drehbar ist. Dadurch kann mit lediglich einem Einstellelement die Temperatur des Mischwassers und die Durchflussmenge des Mischwassers eingestellt werden. Dadurch kann die Kartusche besonders kompakt ausgebildet werden. Außerdem vereinfacht dies auch das Einstellen der Mischwassertemperatur und der Durchflussmenge, da nur noch ein Element, nämlich das Einstellelement, betätigt werden muss.

Ebenso ist es vorteilhaft, wenn das Einstellelement mit dem ersten Steuerelement axialkraftübertragend verbunden ist. Dadurch kann die axiale Verschiebung des Einstellelements entlang der Bewegungsachse auf das erste Steuerelement übertragen werden, um dieses zur Einstellung der Mischwassertemperatur zu bewegen. Die Axialkraft kann beispielsweise durch einen Formschluss zwischen dem Einstellelement und dem ersten Steuerelement übertragen werden.

Zusätzlich oder alternativ kann das Einstellelement von dem ersten Steuerelement in Drehrichtung, d.h. um die Bewegungsachse, entkoppelt sein. Beispielsweise kann das Einstellelement eine Umfangsnut aufweisen, in die ein Vorsprung des ersten Steuerelement eingreift, so dass sich das Einstellelement gegenüber dem ersten Steuerelement drehen kann, die Axialkraft jedoch von dem Einstellelement auf das erste Steuerelement übertragen wird. Alternativ kann die Umfangsnut auch am ersten Steuerelement und der Vorsprung am Einstellelement angeordnet sein. Der Vorsprung kann sich beispielsweise entsprechend der Umfangsnut ebenfalls zumindest teilweise um das Einstellelement oder, insbesondere an einer Innenseite, entlang des ersten Steuerelements erstrecken.

Ebenfalls ist es von Vorteil, wenn das Einstellelement mit dem zweiten Steuerelement drehmomentübertragend verbunden ist. Dadurch kann die Drehung des Einstellelements um die Bewegungsachse auf das zweite Steuerelement übertragen werden, so dass die Durchflussmenge des Mischwassers eingestellt werden kann. Zusätzlich oder alternativ kann das Einstellelement vom zweiten Steuerelement in Axialrichtung entkoppelt sein. Dadurch führt die Verschiebung des Einstellelements, um das erste Steuerelement zur Einstellung der Temperatur des Mischwassers entlang der Bewegungsachse axial zu bewegen, nicht zu einer Bewegung des zweiten Steuerelements.

Ferner ist es von Vorteil, wenn das zweite Steuerelement in Axialrichtung festgelegt ist. Dadurch wird das zweite Steuerelement an dessen axialer Position gegenüber dem Gehäuse fixiert. Die Mengensteuereinheit kann beispielsweise an dessen Umfang zumindest abschnittsweise einen in Umfangsrichtung erstreckenden, insbesondere rotationssymmetrischen, Absatz aufweisen. Im Gehäuse kann eine Aussparung angeordnet sein, wobei der Absatz in die Aussparung eingreift. Dadurch ist das zweite Steuerelement um die Bewegungsachse drehbar und axial entlang der Bewegungsachse gehalten. Der Absatz kann auch an dem zweiten Steuerelement angeordnet sein.

Vorteilhaft ist es, wenn das Einstellelement ein dem zweiten Steuerelement zugewandtes Koppelende aufweist, das in Umfangsrichtung formschlüssig und in Axialrichtung verschiebbar in eine Koppelaussparung des zweiten Steuerelements eingreift. Dabei kann das Koppelende eine Außenverzahnung aufweisen. Die Koppelaussparung kann beispielsweise eine Innenverzahnung aufweisen. Dadurch kann die formschlüssige Verbindung einfach ausgebildet werden. Insbesondere kann das Koppelende lediglich in die Koppelaussparung eingesteckt werden, so dass die formschlüssige Verbindung ausgebildet ist. Ein Zusammenbau der Kartusche und ein Austausch vom Einstellelement oder dem zweiten Steuerelement werden dadurch vereinfacht.

Vorteilhaft ist es, wenn das Einstellelement einen in einem Austrittsbereich des Gehäuses aus diesem führenden Bedienabschnitt aufweist, mittels dem das Einstellelement zur Einstellung der Durchflussmenge des Mischwassers drehbar ist. An dem Bedienabschnitt kann beispielsweise ein Bedienelement angeordnet werden, so dass damit die Temperatur des Mischwassers und/oder die Durchflussmenge des Mischwassers eingestellt werden kann. An dem Bedienabschnitt kann beispielsweise ein Aktor angeordnet werden, so dass das Einstellelement mit Hilfe des Aktors zur Einstellung der Temperatur des Mischwassers axial entlang der Bewegungsachse verschoben und/oder zur Einstellung der Durchflussmenge des Mischwassers um die Bewegungsachse gedreht werden kann. Der Aktor kann beispielsweise ein Elektromotor sein.

Von Vorteil ist es auch, wenn die Kartusche ein mit dem Einstellelement in Axialrichtung gekoppeltes Verstellelement aufweist, mittels dem das Einstellelement zur Einstellung der Mischwassertemperatur entlang der Bewegungsachse axial bewegbar ist. Zur Einstellung der Mischwassertemperatur muss somit nicht direkt das Einstellelement bewegt werden, sondern es kann über das Verstellelement das Einstellelement in Axialrichtung bewegt werden. Zusätzlich oder alternativ kann das Verstellelement auch in Umfangsrichtung gegenüber dem Einstellelement entkoppelt sein. Das Einstellelement kann somit gegenüber dem Verstellelement gedreht werden.

Weiterhin ist es vorteilhaft, wenn zwischen dem Verstellelement und dem Gehäuse eine Schraubverbindung ausgebildet ist. Durch eine zweite Drehung des Verstellelements verschiebt es sich somit selbst in Axialrichtung entlang der Bewegungsachse. Diese Verschiebung kann auf das Einstellelement übertragen werden, beispielsweise wenn das Verstellelement in Axialrichtung mit dem Einstellelement gekoppelt ist, so dass das Einstellelement entlang der Bewegungsachse axial bewegt wird. Dadurch kann das Einstellelement auf einfache Weise entlang der Bewegungsachse axial bewegt werden. Dabei kann beispielsweise das Verstellelement als Hülse mit einem Außengewinde ausgebildet sein, das in ein Innengewinde eines Austrittsbereichs des Gehäuses eingeschraubt ist. Dadurch kann auf einfache Weise das erste Steuerelement zur Einstellung der Mischwassertemperatur entlang der Bewegungsachse axial bewegt werden.

Ebenfalls ist es von Vorteil, wenn das Einstellelement zwei zueinander axial beabstandete Axialanschläge aufweist, zwischen denen das Verstellelement axial am Einstellelement festgelegt ist. Dadurch ist das Verstellelement zum Einstellelement in Axialrichtung gekoppelt. Das Einstellelement kann ferner zumindest im Bereich des Verstellelements rotationssymmetrisch ausgebildet sein. Wenn das Verstellelement als Hülse ausgebildet ist, kann sich das Verstellelement um das Einstellelement und zwischen den beiden Axialanschlägen drehen, so dass das Verstellelement gegenüber dem Einstellelement drehbar entkoppelt ist.

Vorteilhaft ist es auch, wenn das erste Steuerelement, das zweite Steuerelement, das Einstellelement und/oder das Verstellelement koaxial zur Bewegungsachse angeordnet sind. Dadurch ist ein einfacher Aufbau der Kartusche gegeben. Beispielsweise kann die Drehung des Einstellelements direkt auf das zweite Steuerelement übertragen werden, um die Durchflussmenge einzustellen. Es werden beispielsweise keine Umlenkelemente benötigt, um die Drehung oder die axiale Verschiebung des Einstellelements auf die Steuerelemente zu übertragen.

Außerdem ist es von Vorteil, wenn das zweite Steuerelement als eine Steuerscheibe mit einer ersten Durchgangsöffnung ausgebildet ist. Dabei kann mittels einer Ausrichtung zwischen der ersten Durchgangsöffnung und einer zweiten Durchgangsöffnung die Durchflussmenge des Mischwassers eingestellt werden. Die zweite Durchgangsöffnung kann beispielsweise in einer Ventilplatte der Mengensteuereinheit angeordnet sein. Zusätzlich oder alternativ kann die zweite Durchgangsöffnung auch im Gehäuse angeordnet sein. Durch die Drehung des zweiten Steuerelements um die Bewegungsachse kann die erste Durchgangsöffnung in Deckung mit der zweiten Durchgangsöffnung gebracht werden, so dass eine Durchflussmenge des Mischwassers maximal ist. Wenn sich die beiden Durchgangsöffnungen lediglich teilweise überdecken, ist eine Durchflussöffnung verringert, so dass auch die Durchflussmenge verringert ist. Wenn sich die beiden Durchgangsöffnungen in keinem Bereich überdecken, verschließen sie sich gegenseitig, so dass kein Mischwasser durch die Durchgangsöffnungen fließen kann. Die erste Durchgangsöffnung und die zweite Durchgangsöffnung können des Weiteren beispielsweise koaxial zur Kartusche orientiert sein.

Des Weiteren ist es von Vorteil, wenn sich der Warmwasser- und/oder der Kaltwasserzulauf zumindest abschnittsweise entlang einer Umfangsrichtung um das Gehäuse erstreckt. Zusätzlich oder alternativ können der Warmwasser- und der Kaltwasserzulauf zur Bewegungsachse axial zueinander beabstandet angeordnet sein. Dadurch kann mittels des entlang der Bewegungsachse axial bewegbaren ersten Steuerelements auf einfache Weise der Durchfluss am Warmwasser- und/oder der Kaltwasserzulauf eingestellt werden.

Vorteilhaft ist es auch, wenn der Mischwasserablauf an einer dem Austrittsbereich des Einstellelements gegenüberliegenden Stirnseite des Gehäuses angeordnet ist.

Des Weiteren wird eine Sanitärarmatur vorgeschlagen, die eine Kartusche zum Mischen von Kalt- und Warmwasser, einen Kaltwasserkanal und einen Warmwasserkanal zum Zuführen des Kalt- und des Warmwassers zur Kartusche umfasst. Außerdem umfasst die Sanitärarmatur einen Ablaufkanal, um das Mischwasser von der Kartusche zu einem Aufnahmeraum eines Sanitärelements zu leiten.

Erfindungsgemäß ist die Kartusche nach einem oder mehreren der in der vorangegangenen und/oder nachfolgenden Beschreibung genannten Merkmale ausgebildet.

Vorteilhaft ist es, wenn die Sanitärarmatur zum Einstellen einer Mischwassertemperatur und/oder zur Einstellung einer Durchflussmenge des Mischwassers einen mit einem Einstellelement der Kartusche verbundenen Aktor aufweist. Der Aktor kann beispielsweise als ein Elektromotor ausgebildet sein. Außerdem kann der Aktor koaxial zum Einstellelement angeordnet sein. Durch den Aktor kann die Temperatur des Mischwassers und/oder die Durchflussmenge des Mischwassers digital, beispielsweise an einem Bildschirm, eingegeben werden. Die Sanitärarmatur ist dadurch komfortabler ausgebildet.

Ferner ist es von Vorteil, wenn die Sanitärarmatur eine Bedieneinheit aufweist, die mit dem Einstellelement der Kartusche verbunden ist, so dass die Mischwassertemperatur und/oder die Durchflussmenge des Mischwassers manuell eingestellt werden kann. Dies vereinfacht den konstruktiven Aufbau der Sanitärarmatur. Der Aktor und/oder die Bedieneinheit können ferner am Bedienabschnitt des Einstellelements der Kartusche angeordnet sein.

Vorteilhaft ist es ebenfalls, wenn die Bedieneinheit und/oder der Aktor eine Schaltvorrichtung aufweisen, mittels der wahlweise zwischen dem Einstellen der Mischwassertemperatur und dem Einstellen der Durchflussmenge des Mischwassers umschaltbar ist. Die Schaltvorrichtung kann beispielsweise zwischen dem Drehen des Einstellelements um eine Bewegungsachse des Einstellelements, um die Durchflussmenge des Mischwassers einstellen zu können, und der Bewegung des Einstellelements axial entlang einer Bewegungsachse des Einstellelements, um die Temperatur des Mischwassers einstellen zu können, umschalten. Die Schaltvorrichtung kann dazu zwei Schaltstellungen umfassen. In der ersten Schaltstellung kann der Aktor das Einstellelement direkt drehen, so dass die Durchflussmenge des Mischwassers eingestellt werden kann. In der zweiten Schaltstellung kann der Aktor ein Verstellelement der Kartusche drehen. Das Verstellelement kann dessen eigene Drehung in eine axiale Bewegung des Einstellelements entlang der Bewegungsachse umsetzen, so dass die Temperatur des Mischwassers eingestellt werden kann.

Alternativ kann die Sanitärarmatur auch zwei Aktoren umfassen. Ein erster Aktor kann zur Einstellung der Durchflussmenge des Mischwassers das Einstellelement drehen. Ein zweiter Aktor kann dagegen die Temperatur des Mischwassers einstellen, indem der zweite Aktor beispielsweise das Verstellelement der Kartusche dreht.

Weitere Vorteile der Erfindung sind in den nachfolgenden Ausführungsbeispielen beschrieben. Es zeigen:
- **Figur 1**: eine Schnittansicht einer Kartusche zum Einstellen einer Mischwassertemperatur und einer Durchflussmenge eines Mischwassers und
- **Figur 2**: eine perspektivische Ansicht einer Kartusche.

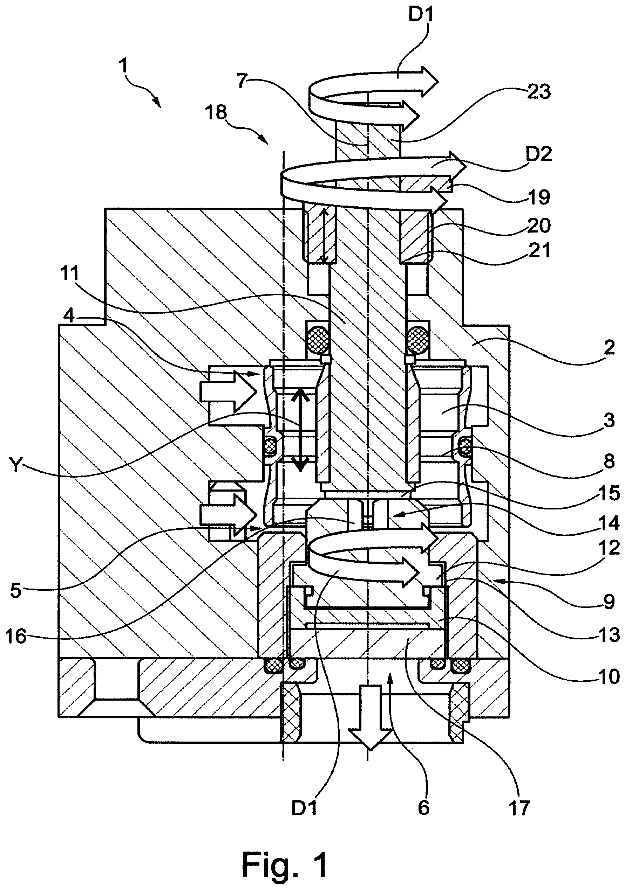

Figur 1 zeigt eine Schnittansicht einer Kartusche 1 zum Einstellen einer Temperatur und einer Durchflussmenge eines Mischwassers. Die Kartusche 1 umfasst ein Gehäuse 2, das einen Mischraum 3, einen in den Mischraum 3 führenden Kaltwasserzulauf 4 und einen in den Mischraum 3 führenden Warmwasserzulauf 5 aufweist. Im Mischraum 3 ist außerdem ein entlang einer Bewegungsachse 7 axial bewegbares erstes Steuerelement 8 zur Einstellung einer Mischwassertemperatur angeordnet. Das erste Steuerelement 8 kann in Axialrichtung Y in beide Richtungen bewegt werden. Durch die Verschiebung des ersten Steuerelements 8 kann ein Durchfluss einer Kaltwassermenge durch den Kaltwasserzulauf 4 in den Mischraum 3 gesteuert werden. Zusätzlich oder alternativ kann durch die Verschiebung des ersten Steuerelements 8 der Durchfluss einer Warmwassermenge durch den Warmwasserzulauf 5 gesteuert werden. Zur Steuerung der Kaltwassermenge kann das erste Steuerelement 8 der Kartusche 1 im vorliegenden Ausführungsbeispiel beispielsweise axial entlang der Bewegungsachse 7 in Richtung des Kaltwasserzulaufs 4 bewegt werden, so dass das erste Steuerelement 8 den Kaltwasserzulauf 4 zumindest teilweise absperrt. Wenn beispielsweise weniger Kaltwasser in den Mischraum 3 geleitet wird, steigt die Temperatur des Mischwassers. Zusätzlich oder alternativ kann auch mehr Warmwasser in den Mischraum 3 geleitet werden, um die Temperatur des Mischwassers zu erhöhen.

Zur Steuerung der Warmwassermenge kann das erste Steuerelement 8 der Kartusche 1 im vorliegenden Ausführungsbeispiel der Figur 1 beispielsweise axial entlang der Bewegungsachse 7 in Richtung des Warmwasserzulaufs 5 bewegt werden, so dass das erste Steuerelement 8 den Warmwasserzulauf 5 zumindest teilweise absperrt. Wird beispielsweise weniger Warmwasser in den Mischraum 3 geleitet, sinkt die Temperatur des Mischwassers. Zusätzlich oder alternativ kann auch mehr Kaltwasser in den Mischraum 3 geleitet werden, so dass die Temperatur des Mischwassers sinkt.

Um das Mischwasser aus der Kartusche 1 auszuleiten, weist diese einen Mischwasserablauf 6 auf. Das Wasser weist somit eine Durchflussrichtung durch die Kartusche 1 auf, die von dem Kaltwasserzulauf 4 und dem Warmwasserzulauf 5 durch den Mischraum 3 zum Mischwasserablauf 6 führt.

Um mit der Kartusche 1 neben der Einstellung der Mischwassertemperatur auch eine Durchflussmenge des Mischwassers einzustellen, weist die Kartusche 1 eine dem ersten Steuerelement 8 in Durchflussrichtung nachgelagerte Mengensteuereinheit 9 auf. Die Mengensteuereinheit 9 umfasst außerdem ein um die Bewegungsachse 7 drehbares zweites Steuerelement 10. Das zweite Steuerelement 10 ist gemäß dem Ausführungsbeispiel der Figur 1 dem Mischwasserablauf 6 vorgelagert. Das zweite Steuerelement 10 kann einen Mischwasserfluss vom Mischraum 3 zum Mischwasserabfluss 6 zumindest teilweise blockieren, so dass die Durchflussmenge des Mischwassers eingestellt werden kann. Das zweite Steuerelement 10 kann den Mischwasserfluss auch absperren, so dass dieser erliegt.

Gemäß dem in Figur 1 gezeigten Ausführungsbeispiel weist die Kartusche 1 ein Einstellelement 11 auf. Das Einstellelement 11 kann entlang der Bewegungsachse 7 axial verschoben werden. Das Einstellelement 11 kann, wie beispielsweise in Figur 1 gezeigt ist, als eine Einstellwelle ausgebildet sein. Eine Mittellinie des Einstellelements 11 ist somit gleich der Bewegungsachse 7. Eine Bewegung axial entlang der Bewegungsachse 7 des Einstellelements 11 kann auf das erste Steuerelement 8 übertragen werden. Mit Hilfe des Einstellelements 11 kann somit die Einstellung der Mischwassertemperatur vorgenommen werden. Das Einstellelement 11 führt im vorliegenden Ausführungsbeispiel in einem Austrittsbereich 18 aus dem Gehäuse 2 der Kartusche 1. Das Einstellelement 11 weist ferner ein außerhalb des Gehäuses 2 angeordneten Bedienabschnitt 23 auf.

Wie im Ausführungsbeispiel der Figur 1 gezeigt ist, kann das Einstellelement 11 mit dem ersten Steuerelement 8 und dem zweiten Steuerelement 10 derart gekoppelt sein, dass mittels des Einstellelements 11 das erste Steuerelement 8 entlang der Bewegungsachse 7 axial verschoben und das zweite Steuerelement 10 um die Bewegungsachse 7 gedreht werden kann. Dadurch kann mit Hilfe des Einstellelements 11 die Mischwassertemperatur und die Durchflussmenge des Mischwassers durch die Kartusche 1 eingestellt werden. Dadurch ist eine kompakte Ausführung der Sanitärarmatur, in der die Kartusche 1 angeordnet ist, möglich.

Um einerseits mit Hilfe des Einstellelements 11 die Mischwassertemperatur einzustellen, ist gemäß des vorliegenden Ausführungsbeispiels der Figur 1 das Einstellelement 11 mit dem ersten Steuerelement 8 axialkraftübertragend gekoppelt. Die Bewegung des Einstellelements 11 in Axialrichtung Y, beispielsweise in Richtung des Mischwasserablaufs 6, führt ebenfalls dazu, dass das erste Steuerelement 8 in Richtung des Mischwasserablaufs 6 bewegt wird. Das erste Steuerelement 8 versperrt dadurch zumindest teilweise den Warmwasserzulauf 5 und gibt im vorliegenden Ausführungsbeispiel den Kaltwasserzulauf 4 zumindest teilweise frei, so dass eine Zuflussmenge des Warmwassers in den Mischraum 3 zumindest verringert und eine Zuflussmenge des Kaltwassers in den Mischraum 3 erhöht wird, so dass die Mischwassertemperatur sinkt. Eine Bewegung entgegengesetzt zu der eben besprochenen Bewegung bewirkt, dass die Zuflussmenge des Kaltwassers in den Mischraum 3 zumindest verringert und die Zuflussmenge des Warmwassers in den Mischraum 3 zumindest erhöht wird, so dass die Mischwassertemperatur steigt.

Zusätzlich oder alternativ kann das Einstellelement 11 auch um die Bewegungsachse 7 drehbar im Gehäuse 2 gelagert sein. Das Einstellelement 11 kann beispielsweise um eine erste Drehung D1 in beide Drehrichtungen um einen Winkel gedreht werden.

Vorzugsweise kann das Einstellelement 11 auch zum ersten Steuerelement 8 gegenüber der ersten Drehung D1 um die Bewegungsachse 7 entkoppelt sein. Dadurch wird die erste Drehung D1 des Einstellelements 11 nicht auf das erste Steuerelement 8 übertragen. Wenn jedoch das erste Steuerelement 8 rotationssymmetrisch ausgebildet ist, müssen das Einstellelement 11 und das erste Steuerelement 8 nicht unbedingt gegenüber der ersten Drehung D1 voneinander entkoppelt sein. Durch die Rotationssymmetrie bleibt die Wirkung des ersten Steuerelement 8 auch erhalten, wenn es gedreht wird.

Um andererseits mit Hilfe des Einstellelements 11 die Durchflussmenge des Mischwassers durch die Kartusche 1 einstellen zu können, ist gemäß des vorliegenden Ausführungsbeispiels der Figur 1 das Einstellelement 11 drehmomentübertragend mit dem zweiten Steuerelement 10 verbunden. Die erste Drehung D1 des Einstellelements 11 kann somit auf das zweite Steuerelement 10 übertragen werden. Das erste Steuerelement 8 kann dabei von der ersten Drehung D1 des Einstellelements 11 entkoppelt sein.

Gemäß dem in Figur 1 gezeigten Ausführungsbeispiel ist außerdem das zweite Steuerelement 10 in Axialrichtung Y festgelegt. Das zweite Steuerelement 10 kann sich zwar um die Bewegungsachse 7 drehen, jedoch ist das zweite Steuerelement 10 festgelegt, so dass eine Verschiebung axial entlang der Bewegungsachse 7 nicht möglich ist. Um das zweite Steuerelement 10 in Axialrichtung Y festzulegen, kann die Mengensteuereinheit 9 beispielsweise gemäß Figur 1 einen Absatz 12 aufweisen, der in eine Aussparung 13 im Gehäuse 2 eingreift. Der Absatz 12 kann sich zwar in der Aussparung 13 drehen, jedoch ist eine Bewegung in Axialrichtung Y verhindert.

Um das Einstellelement 11 von der Mengensteuereinheit 9 und/oder von der zweiten Steuerelement 10 zu entkoppeln, kann zwischen dem Einstellelement 11 und dem zweiten Steuerelement 10 eine Koppelverbindung 14 ausgebildet sein. Die Koppelverbindung 14 kann als Formschluss ausgebildet sein, der ein Drehmoment von dem Einstellelement 11 auf das zweite Steuerelement 10 überträgt, und/oder eine Verschiebung in Axialrichtung Y des Einstellelements 11 gegenüber dem zweiten Steuerelement 10 zulässt. Das Einstellelement 11 weist ein dem zweiten Steuerelement 10 zugewandtes Koppelende 15 auf. Das zweite Steuerelement 10 weist außerdem eine Koppelaussparung 16 auf, in die das Koppelende 15 eingreifen kann. Gemäß Figur 1 greift das Koppelende 15 in Umfangsrichtung formschlüssig und in Axialrichtung Y verschiebbar in die Koppelaussparung 16. Das Koppelende 15 ist dadurch in Umfangsrichtung in der Koppelaussparung 16 fixiert, ist jedoch in Axialrichtung Y beweglich. Durch die formschlüssige Verbindung kann die erste Drehung D1 von dem Koppelende 15 über die Koppelaussparung 16 auf das zweite Steuerelement 10 übertragen werden. Durch die axiale Verschiebbarkeit des Koppelendes 15 gegenüber der Koppelaussparung 16, ist das Einstellelement 11 gegenüber dem zweiten Steuerelement 10 in Axialrichtung Y entkoppelt.

Um die Koppelverbindung 14 auszubilden, kann beispielsweise das Koppelende 15 eine Außenverzahnung aufweisen. Zusätzlich kann die Koppelaussparung 16 eine Innenverzahnung aufweisen. Mittels eines Ineinandergreifens der Außenverzahnung und der Innenverzahnung kann die Drehung zwischen dem Einstellelement 11 und dem zweiten Steuerelement 10 übertragen werden. Eine axiale Verschiebbarkeit ist dabei weiterhin gegeben.

Um die Durchflussmenge des Mischwassers einzustellen, kann die Kartusche 1 ein Ventilelement 17 aufweisen. Das Ventilelement 17 ist vorteilhafterweise feststehend mit dem Gehäuse 2 verbunden. Das Ventilelement 17 ist gemäß Figur 1 dem zweiten Steuerelement 10 nachgelagert. Das Ventilelement 17 und das zweite Steuerelement 10 können jeweils zumindest eine hier nicht gezeigte Durchgangsöffnung aufweisen. Mittels einer Ausrichtung der beiden Durchgangsöffnungen zueinander kann die Durchflussmenge eingestellt werden. Mit Hilfe der ersten Drehung D1 des zweiten Steuerelements 10 gegenüber dem Ventilelement 17 kann die Durchgangsöffnung des zweiten Steuerelements 10 vorzugsweise deckungsgleich zur Durchgangsöffnung des Ventilelements 17 ausgerichtet werden. Eine Durchflussmenge des Mischwassers wird dadurch maximiert. Wird das zweite Steuerelement 17 dagegen durch die erste Drehung D1 derart verdreht, dass sich die beiden Durchgangsöffnungen lediglich abschnittsweise überdecken, ist die Durchflussmenge verringert. Ist das zweite Steuerelement 10 derart verdreht, dass sich die Durchgangsöffnungen nicht überdecken, ist der Durchfluss des Mischwassers unterbrochen.

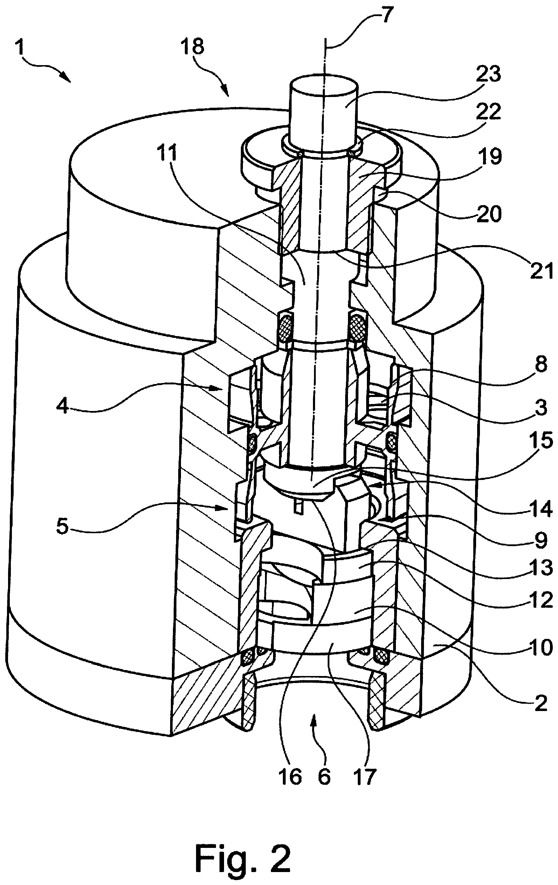

Um das Einstellelement 11 entlang der Bewegungsachse 7 axial zu bewegen, weist die Kartusche 1 im Austrittsbereich 18 ein Verstellelement 19 auf. Das Verstellelement 19 ist mittels einer Schraubverbindung 20 in das Gehäuse 2 eingeschraubt. Im vorliegenden Ausführungsbeispiel weist das Einstellelement außerdem zwei zueinander axial beabstandete Axialanschläge 21 und 22 auf. Der zweite Axialanschlag 22 ist dabei lediglich in der Figur 2 zu sehen. Das Verstellelement 19 ist ferner zwischen den beiden Axialanschlägen 21, 22 am Einstellelement 11 festgelegt. Die beiden Axialanschläge 21, 22 können sich beispielsweise in Umfangsrichtung zumindest abschnittsweise um das Einstellelement 11 erstrecken.

Eine zweite Drehung D2 des Verstellelements 19 kann mittels der Schraubverbindung 20 in eine axiale Verschiebung des Verstellelements 19 umgesetzt werden. Mittels den beiden Axialanschlägen 21, 22 kann die axiale Verschiebung des Verstellelements 19 auf das Einstellelement 11 übertragen werden. Mit Hilfe dieser axialen Verschiebung wird wiederum das erste Steuerelement 8 in dem Mischraum 3 bewegt. Dadurch kann wiederum, wie bereits weiter oben beschrieben, die Mischwassertemperatur eingestellt werden.

In der Kartusche 1 sind des Weiteren das erste Steuerelement 8, das zweite Steuerelement 10, das Einstellelement 11 und das Verstellelement 19 vorzugsweise, wie im vorliegenden Ausführungsbeispiel gezeigt ist, koaxial zueinander ausgerichtet. Dadurch können die beiden Drehungen D1 und D2 unmittelbar auf die das Einstellelement 11 und die beiden Steuerelemente 8, 10 übertragen werden. Auf Umlenkelemente kann dadurch verzichtet werden.

Mit Hilfe der im Ausführungsbeispiel der Figur 1 gezeigten Kartusche 1 kann somit mittels der zwei Drehungen D1 und D2 die Durchflussmenge des Mischwassers durch die Kartusche 1 und die Mischwassertemperatur eingestellt werden. Mit Hilfe der Drehung D1 des Einstellelements 11 kann die Durchflussmenge des Mischwassers durch die Kartusche 1 und mit Hilfe der Drehung D2 die Mischwassertemperatur eingestellt werden.

Die beiden Drehungen D1 und D2 können mit Hilfe eines hier nicht gezeigten Aktors ausgeführt werden. Der Aktor kann beispielsweise einen Elektromotor umfassen, der vorzugsweise koaxial zum Einstellelement 11 angeordnet ist und mit diesem verbunden ist. Die beiden Drehungen D1 und D2 können vorteilhafterweise mit Hilfe eines einzigen Aktors ausgeführt werden. Die beiden Drehungen D1 und D2 sind vorteilhafterweise koaxial zueinander ausgerichtet, so dass die beiden Drehungen D1 und D2 besonders einfach durch den Aktor ausgeführt werden können. Zur Ausbildung der Drehung D1 kann der Aktor an dem Einstellelement 11 und/oder am Bedienabschnitt 23 angreifen. Zur Ausbildung der Drehung D2 kann der Aktor dagegen an dem Verstellelement 19 angreifen.

Figur 2 zeigt eine perspektivische Ansicht der Kartusche 1 der Figur 1. Der Kaltwasserzulauf 4 und/oder der Warmwasserzulauf 5 können sich gemäß der Figur 2 in Umfangsrichtung um die Kartusche 1 erstrecken. Des Weiteren sind die beiden Zuläufe 4, 5 in Axialrichtung voneinander beabstandet. Zu sehen ist in der Figur 2 außerdem der zweite Axialanschlag 22, der mit dem ersten Axialanschlag 21 das Verstellelement 19 axial am Einstellelement 11 festlegt. Die Axialanschläge 21, 22 erstrecken sich dabei ebenfalls um die Umfangsrichtung des Einstellelements 11.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Kartusche
- 2: Gehäuse
- 3: Mischraum
- 4: Kaltwasserzulauf
- 5: Warmwasserzulauf
- 6: Mischwasserablauf
- 7: Bewegungsachse
- 8: erstes Steuerelement
- 9: Mengensteuereinheit
- 10: zweites Steuerelement
- 11: Einstellelement
- 12: Absatz
- 13: Aussparung
- 14: Koppelverbindung
- 15: Koppelende
- 16: Koppelaussparung
- 17: Ventilelement
- 18: Austrittsbereich
- 19: Verstellelement
- 20: Schraubverbindung
- 21: erster Axialanschlag
- 22: zweiter Axialanschlag
- 23: Bedienabschnitt

- Y: Axialrichtung
- D1: erste Drehung
- D2: zweite Drehung

## Patentansprüche

1. Kartusche (1) für eine Sanitärarmatur mit einem Gehäuse (2),
das einen Mischraum (3), einen in den Mischraum (3) führenden Kaltwasserzulauf (4), einen in den Mischraum (3) führenden Warmwasserzulauf (5) und einen vom Mischraum (3) aus dem Gehäuse (2) führenden Mischwasserablauf (6) aufweist, und einem im Mischraum (3) entlang einer Bewegungsachse (7) axial bewegbar angeordneten ersten Steuerelement (8) zur Einstellung einer Mischwassertemperatur,
**dadurch gekennzeichnet, dass** die Kartusche (1) eine dem ersten Steuerelement (8) in Durchflussrichtung nachgelagerte Mengensteuereinheit (9) zur Einstellung einer Durchflussmenge des Mischwassers aufweist, die ein um die Bewegungsachse (7) drehbares zweites Steuerelement (10) umfasst.

2. Kartusche nach dem vorherigen Anspruch, **dadurch gekennzeichnet, dass** die Kartusche (1) ein Einstellelement (11) aufweist, das entlang der Bewegungsachse (7) axial verschiebbar und/oder um die Bewegungsachse (7) drehbar im Gehäuse (2) gelagert ist.

3. Kartusche nach einem oder mehreren der vorherigen Ansprüche, **dadurch gekennzeichnet, dass** das Einstellelement (11) mit den beiden Steuerelementen (8, 10) derart gekoppelt ist, dass mittels des Einstellelements (11) das erste Steuerelement (8) entlang der Bewegungsachse (7) axial verschiebbar und das zweite Steuerelement (10) um die Bewegungsachse (7) drehbar ist.

4. Kartusche nach einem oder mehreren der vorherigen Ansprüche, **dadurch gekennzeichnet, dass** das Einstellelement (11) mit dem ersten Steuerelement (8) axialkraftübertragend verbunden ist und/oder von diesem in Drehrichtung entkoppelt ist.

5. Kartusche nach einem oder mehreren der vorherigen Ansprüche, **dadurch gekennzeichnet, dass** das Einstellelement (11) mit dem zweiten Steuerelement (10) drehmomentübertragend verbunden ist und/oder von diesem in Axialrichtung (Y) entkoppelt ist.

6. Kartusche nach einem oder mehreren der vorherigen Ansprüche, **dadurch gekennzeichnet, dass** das zweite Steuerelement (10) in Axialrichtung (Y) festgelegt ist.

7. Kartusche nach einem oder mehreren der vorherigen Ansprüche, **dadurch gekennzeichnet, dass** das Einstellelement (11) ein dem zweiten Steuerelement (10) zugewandtes Koppelende (15), insbesondere mit einer Außenverzahnung, aufweist, das in Umfangsrichtung formschlüssig und in Axialrichtung (Y) verschiebbar in eine Koppelaussparung (16), insbesondere mit einer Innenverzahnung, des zweiten Steuerelement (10) eingreift.

8. Kartusche nach einem oder mehreren der vorherigen Ansprüche, **dadurch gekennzeichnet, dass** das Einstellelement (10) einen in einem Austrittsbereich (18) des Gehäuses (2) aus diesem führenden Bedienabschnitt (23) aufweist, mittels dem das Einstellelement (11) zur Einstellung der Durchflussmenge des Mischwassers drehbar ist.

9. Kartusche nach einem der vorherigen Ansprüche, **dadurch gekennzeichnet, dass** die Kartusche (1) ein mit dem Einstellelement (11) in Axialrichtung (Y) gekoppeltes und/oder in Umfangsrichtung entkoppeltes Verstellelement (19) aufweist, mittels dem das Einstellelement (11) zur Einstellung der Mischwassertemperatur entlang der Bewegungsachse (7) axial bewegbar ist.

10. Kartusche nach einem der vorherigen Ansprüche, **dadurch gekennzeichnet, dass** zwischen dem Verstellelement (19) und dem Gehäuse (2) eine Schraubverbindung (20) ausgebildet ist, so dass mittels einer zweiten Drehung (D2) des Verstellelements (19) dieses in Axialrichtung (Y) verschiebbar ist, wobei das Verstellelement (19) vorzugsweise als Hülse mit einem Außengewinde ausgebildet ist, das in ein Innengewinde eines Austrittsbereichs (18) des Gehäuses (2) eingeschraubt ist.

11. Kartusche nach einem der vorherigen Ansprüche, **dadurch gekennzeichnet, dass** das Einstellelement (11) zwei zueinander axial beabstandete Axialanschläge (21, 22) aufweist, zwischen denen das Verstellelement (19) axial am Einstellelement (11) festgelegt ist.

12. Kartusche nach einem der vorherigen Ansprüche, **dadurch gekennzeichnet, dass** das erste Steuerelement (8), das zweite Steuerelement (10), das Einstellelement (11) und/oder Verstellelement (19) koaxial zur Bewegungsachse (7) angeordnet sind.

13. Sanitärarmatur mit einer Kartusche (1) zum Mischen von Kalt- und Warmwasser, mit einem Kaltwasserkanal und mit einem Warmwasserkanal zum Zuführen des Kalt- und des Warmwassers zur Kartusche (1) und mit einem Ablaufkanal, um das Mischwasser von der Kartusche (1) zu einem Aufnahmeraum eines Sanitärelements zu leiten, **dadurch gekennzeichnet, dass** die Kartusche (1) nach einem oder mehreren der vorherigen Ansprüche ausgebildet ist.
